# EUROPEAN PATENT SPECIFICATION

(11) **EP 4 559 318 B1**
(45) Date of publication and mention of the grant of the patent: **03.06.2026**
(21) Application number: 23211542.8
(22) Date of filing: 22.11.2023
(51) Int. Cl.: A22C 11/12, B65B 51/04

(54) **REVOLVER MAGAZINE FOR CLOSURE MEANS BARS**
REVOLVERMAGAZIN FÜR VERSCHLUSSMITTELRIEGELN
MAGASIN REVOLVER POUR BARRES DE MOYENS DE FERMETURE

(43) Date of publication of application: 28.05.2025
(73) Proprietor: Poly-clip System GmbH & Co. KG, 65795 Hattersheim (DE)
(72) Inventor: Beyer, Silvio, 65795 Hattersheim am Main (DE)
(74) Representative: Eisenführ Speiser

(56) References cited:
- DE-A1- 2 339 560

## Description

### FIELD OF THE INVENTION

The present invention relates to a magazine for storing and providing at least one closure means bar consisting of at least two closure means. The present invention relates further to a magazine holder configured to receive at least one magazine. Further, the present invention relates to a production system comprising a production machine, at least one magazine holder and at least one magazine.

### BACKGROUND ART

In the manufacturing sausage-shaped products using a clipping machine or the like, it is known to store clips for closing plait like ends of sausage-shaped products on a drum or reel. For example, EP 2 589 559 A2 relates to a clip supply reel for storing and dispensing a reeled clip line, in particular a line of S-clips. These clips have a substantially U-shaped design and lie or abut with their broad or wide sides against each other. The clips are held together by suitable means, such as an adhesive strip extending over the entire clip strand or bar on the outside of the bottom of the U-shaped clips.

A respective reel comprises a reel body with a hub, and disk-shaped outer sidewalls, which are respectively arranged preferably at the axial end faces of the hub. The outer sidewalls extend beyond the outer circumferential surface of the hub in the radial direction. The storage space defined by the inner facing surfaces of the disk-shaped outer sidewalls and the outer circumferential surface of hub and extending circumferentially around the hub is used to accommodate the clip line.

Clip reels are particularly used in clipping machines which are often connected to a stuffing machine to produce sausage products as described in DE 10 2005 032 530 A1. In the clipping machine, filling material is stuffed into a tubular casing and is enclosed by placing first and second clips at respective ends.

DE 23 39 560 A1 describes a clip magazine comprising a storage drum, accepting stacks of clips in a series of axial grooves spaced round its periphery. The storage drum is rotatably arranged on a fixed support. A support element for clips is pivotably provided at the lower end of each groove.

However, in the production of sausage-shaped products, a major factor reducing the productivity of a respective machine or device is the forced downtime due to the exchange of emptied clip supplies.

Therefore, it is an objective of the present invention to provide a clip magazine that provides shorter downtimes and faster production speed.

### SUMMARY

The following description contains specific information pertaining to implementations in the present disclosure. The present disclosure describes a magazine for storing and providing at least one closure means bar consisting of at least two closure means as defined in independent claim 1. Further, the present invention discloses a magazine holder as defined in independent claim 10. Moreover, the present invention discloses a production system for filling and closing a tubular or bag-shaped packaging case to produce sausage-shaped products, in particular sausages, as defined in claim 14. Further details of these inventive items are defined in the dependent claims.

According to a first aspect of the invention, a magazine for storing and providing at least one closure means bar consisting of at least two closure means arranged abutting one another at their wide sides, in particular at least substantially U-shaped closure means, comprises at least one elongated support core having a central longitudinal axis and at least two elongated storage spaces arranged on an outer circumferential side of the support core, each of the at least two elongated storage spaces have a central longitudinal axis that extends at least substantially parallel to the central longitudinal axis of the support core. Each elongated storage space is configured to receive at least one closure means bar, and each elongated storage space has at least one first opening on an end surface of the elongated storage space, wherein each elongated storage space comprises at least one guide means that extends from an inner wall of storage space parallel to the central longitudinal axis of the support core inside the elongated storage space.

The elongated storage spaces can be arranged in an even pitch, relative to the circumference of the elongated support core, or in an uneven pitch. In the case of a plurality of storage spaces arranged in an even pitch, these can be arranged in the manner of a revolver magazine. Utilizing a revolver magazine-like mechanism, the magazine can be used as an easy storage for a large amount of closure means.

As stated above, each elongated storage space has at least one first opening. This first opening can be used to insert or feed a closure means bar rod into the storage space and to dispense or discharge individual closure means or segments of closure means from the closure means bar. It is also feasible that each elongated storage space comprises, in addition to the first opening, a second opening disposed on an end surface opposite the end surface having the first opening. In this case, one of the two openings, for example the first opening, forms the feed opening for the feed or insertion of closure means bars into the storage space and the other opening, for example the second opening, forms the discharge opening.

If one of the two openings, e.g. the first opening, forms the feed opening, the cross-sectional area of the first opening is larger than the cross-sectional area of the second opening forming the discharge opening. The larger cross-sectional area of the feed opening facilitates insertion of a closure means bar when closure means bars are put into the storage spaces of the magazine. The opening forming the feed opening, may be configured to taper from the outside of the opening toward the storage space. Utilizing this design can provide an insertion aid for the closure means and facilitate insertion of the closure means into the elongated storage spaces.

Of course, the functions of the two openings - feeding and discharging - and thus their geometrical design can also be reversed.

It is also possible that the elongated storage spaces can be configured to taper from the feed opening to the discharge opening such that closure means of the closure means bars put into the feed opening are aligned when they arrive at the discharge opening. The elongated storage spaces can be formed similar to a funnel that becomes smaller from the feed opening towards the discharge opening.

Further, the magazine can be used not only for providing and supplying closure means to a production machine, such as a clipping machine, but also as a storage location for the closure means bars during transport and storage, for example, in a storage rack. For this purpose, closure means bars can be stored in each or at least some of the storage spaces, wherein each of the storage spaces can preferably comprise a lid or cover on the feed opening and/or a lid or cover on the discharge opening to prevent closure means bars or segments of the closure means bars from falling out of these openings during transportation and/or storage. In the simplest case, the lid can be formed by an adhesive strip or the like covering the respective opening. The lid or cover can also be used as an originality closure feature so that a user can recognize that the magazine is from the original manufacturer and has not been refilled if the originality closure feature is not damaged or destroyed. The authenticity or originality closure can be formed in different ways. For example, a seal can be provided that must be broken to open the storage space.

Moreover, the magazine can preferably comprise a mechanism that closes a lid on the feed opening and/or on the discharge opening when the magazine is transported or used as a storage space, but can open the feed opening and/or the discharge opening after the magazine is mounted on a production machine, for example via a magazine holder described later. The magazine can be preferably attached to the magazine holder such that closure means are provided via the at least one first opening.

Each elongated storage space comprises at least one guide means that extends parallel to the central longitudinal axis of the storage space and the support core inside the elongated storage space. The guide means can be used to guide the at least one closure means. Preferably, the guide means extend along the entire, or at least nearly the entire, length of the storage space.

Further, the guide means can be shaped to align the closure means. In some embodiments, the guide means comprises a protrusion or ridge that is configured to guide closure means, preferably U-shaped closure means. For this, the protrusion comprises a shape such that the inner sides of the U-shaped closure means are aligned on outer surfaces of the protrusion. The protrusion can be a lengthy protrusion comprising a cross-sectional shape, such as a square shape, a round shape or a triangular shape. Further, the protrusion may be located in the center of the storage space. However, other embodiments are also possible, such as providing at least two projections on the inner walls of the storage space in a mutually opposite position in such a way that they guide the legs of the U-shaped closure means on the outside thereof.

In some embodiments, at least one component of the magazine can at least partially be made in a 3D printing process. Preferably, certain or all components of the magazine can be partially made in a 3D printing process, such as the storage spaces, the elongated support core and/or other components of the magazine. In this manner, larger amounts of magazines can be provided in a fast and easy manner. Moreover, by making components in a 3D printing process, these components can be lightweight and therefore reduce the weight of the magazine overall. As one of several possible alternatives may also be provided, that components of the magazine can be injection moulded.

As already mentioned above, in some embodiments, the at least two elongated storage spaces can be equidistant arranged to each other on a closed curve surrounding the central longitudinal axis of the elongated support core. A magazine can comprise multiple numbers of elongated storage spaces, for example a magazine can comprise preferably three, four, five, six, etc. and so on elongated storage spaces equidistant arranged to each other surrounding the central longitudinal axis of the support core. Each of the elongated storage spaces can provide the same type of closure means or they can provide different types of closure means. The elongated storage spaces can also comprise different sizes of the same type of closure means.

In some embodiments, each of the at least two elongated storage spaces can comprise at least one viewing hole on an outer surface. By providing at least one viewing hole, an operator can easily check by viewing if a respective storage space is empty. Further, the operator can check the amount of closure means left in the elongated storage space.

In some embodiments, the support core can comprise at least one bearing portion having a central longitudinal axis, wherein the central longitudinal axis of the bearing portion is coaxially aligned with the central longitudinal axis of the elongated support core. Thus, the support core can rotate about the central longitudinal axis of the bearing portion. In some other embodiments, the bearing portion receives a shaft of a magazine holder. In some other embodiments, the support core comprises a hub that is coaxially aligned with the bearing portion. The hub can comprise a shaft that is then received by that magazine holder.

In some embodiments, at least the support core and/or at least one of the elongated storage spaces can have a predetermined colour corresponding to a characteristic of a specific closure means type in terms of, e.g., geometry, size and/or material of the closure means, the presence of a cover layer on the closure means etc. For example, a characteristic of a closure means concerning the size can be a length or width, or a certain length to width ratio of a respective closure means type. Further, the geometry characteristic can be a certain shape of the closure means type. For example, the closure means can be U-shaped, U-shaped without rounded edges or V-shaped. By using different colours corresponding to different types of closure means, the operator can easily notice by checking the colour of a magazine or the colour of an elongated storage space which type of closure means are provided by that specific magazine or that specific elongated storage space. Preferably, a magazine can comprise multiple elongated storage spaces in different colours. In this manner, the operator can easily check which types of different closure means are provided by the magazine. The colour can be provided by a colour marking. Further, the whole magazine can be coloured. In some embodiments, the magazine can store and provide more than one type of closure means. The closure means types can differ in shape and size. For example, a general U-shaped closure means, such as an S-clip, can have two substantially parallel legs and a crossbar connecting both legs such that a U-shape is resembled by the closure means. The ratio of the length of the legs to the length of the crossbar can vary among different types of closure means. Further, the thickness of the legs and crossbar can vary. The thickness of the legs can be different from the thickness of the crossbar. A closure means bar consists of at least two closure means that preferably lay flat against each other on their wide sides. For example, if the closure meals are U-shaped clips, for a closure means bar consisting of two U-shaped clips, the legs lay parallel against each other and the crossbar of each U-shaped clip lay parallel against each other such that both clips lay flat against each other. In general, at least two U-shaped closure means lying flat against each other on their wide side form a bar. For example, a magazine comprising 7 elongated storage spaces, can store up to 1,120 U-shaped closure means with 160 U-shaped closure means in each storage space.

The length of an elongated storage space in the longitudinal direction can be between 200 mm and 400 mm, preferably between 250 mm and 350 mm and even more preferably between 260 mm and 280 mm. In some embodiments, the length of the elongated storage space is preferably 270 mm.

An S-clip is a U-shaped closure means that is created by bending a straight metal rod into an U-shape. S500 series clips are specified by having a leg diameter of roughly 1.5 mm to 1.9 mm, preferably 1.7 mm and an outer leg width that is measured from the outer side of one leg to the outer side of another leg of the same clip of roughly 9 mm to 11 mm, preferably 10 mm. S600 series clips have a leg diameter of roughly 1.8 mm to 2.2mm, preferably 2.0 mm and an outer leg width of roughly 10 mm to 14 mm, preferably 12 mm. S700 series clips have a leg diameter of roughly 2.8 mm to 3.2 mm, preferably 3.0 mm and an outer leg width of roughly 14 mm to 18 mm, preferably 16 mm.

Thus, in a single elongated storage space, up to 160 U-shaped closure means of a clip type S500 series are preferably stored and/or up to 137 U-shaped closure means of another clip type S600 series are preferably stored and/or up to 110 U-shaped closure means of another clip type S700 series are preferably stored. The total amount of U-shaped closure means to be stored in a magazine is then determined by the number of elongated storage spaces, whereas the minimum number of elongated storage spaces is 2, multiplied with the amount of U-shaped closure means to be stored in a single elongated storage space.

For 4 elongated storage spaces, up to 740 U-shaped closure means of the type S500 series are preferably stored and/or up to 548 U-shaped closure means of the type S600 series are preferably stored and/or up to 440 U-shaped closure means of the type S700 series are preferably stored.

Furthermore, for 5 elongated storage spaces, up to 800 U-shaped closure means of the type S500 series are preferably stored and/or up to 685 U-shaped closure means of the type S600 series are preferably stored and/or up to 550 U-shaped closure means of the type S700 series are preferably stored.

Moreover, for 6 elongated storage spaces, up to 960 U-shaped closure means of the type S500 series are preferably stored and/or up to 822 U-shaped closure means of the type S600 series are preferably stored and/or up to 660 U-shaped closure means of the type S700 series are preferably stored.

Additionally, for 7 elongated storage spaces, up to 1,120 U-shaped closure means of the type S500 series are preferably stored and/or up to 959 U-shaped closure means of the type S600 series are preferably stored and/or up to 770 U-shaped closure means of the type S700 series are preferably stored.

The possibility of accommodating closure means of different types in one and the same magazine also offers the advantage of being able to manufacture different products requiring different closure means with one production machine without having to change the magazine.

In some embodiments, a machine readable identification mark can be provided for identifying at least the size of a specific closure means type. The machine readable identification mark can be preferably a code written on an outer surface of the magazine. The machine readable identification mark can also be a chip, such as an RFID chip, a QR code, a bar code or any other type of readable information storage that provides information about the magazine when read out. The machine readable identification mark can provide information for example to a clipping machine whether the closure means of the magazine are compatible with the clipping machine.

According to another aspect of the invention, a magazine holder is configured to receive at least one magazine and the magazine holder is further configured to provide at least one closure means for a production machine, in particular a clipping machine, from a magazine arranged on or at the magazine holder. The magazine holder comprises a support member having at least one closure means receiving opening and at least one closure means guide extending from the receiving opening to at least one dispensing portion configured to be disposed adjacent a closure means access of a production machine. The support member is configured to receive a magazine, in particular as described above, which can be arranged rotatably about the central longitudinal axis of the magazine at the magazine holder. The magazine holder further comprises a holding section extending at least partially perpendicular to the support member. Hence, the magazine is configured to be rotated on the support member into a position such that a discharge opening of an elongated storage space of the magazine is aligned with the receiving opening of the magazine holder so that at least one closure means can be provided via the at least one closure means receiving opening of the support member to the guide of the magazine holder.

Since magazines with different closure means or a magazine that provides different closure means can be provided, it is advantageous if the guide is interchangeable. It is also advantageous if the guide for a particular closure means has the same colour as the respective magazine or at least the colour of a storage space of the magazine that accommodates the closure means that match this guide.

In principle, the guide can be formed by simple elements, as in the case of U-shaped closure means by a rod or bar whose diameter corresponds to the distance between the two legs of the U-shaped closure means. In some embodiments, the magazine holder can further comprise a housing that extends from the support member along the guide. The housing can be configured to further improve the guiding of the closure means on the guide of the magazine holder. For example, the housing can preferably be a bent element that is positioned close to the guide so that closure means being guided by the guide cannot fall off the guide. Thus, the housing provides a barrier to hold the closure means on the guide. The housing can preferably extend from the receiving opening.

In some embodiments, the at least one holding section can be provided for detachably attaching the magazine holder to a production machine. The magazine holder can be preferably detachably attached using screws, magnets, rivets, bolts or a quick release latch.

In some embodiments, the guide can have a bent shape. The guide can be preferably partially circular shaped. By utilizing a bent shape, closure means being provided via the receiving opening of the support member to the guide can be deflected from falling in a downwards direction to a direction that is perpendicular to the downwards direction. In this manner, gravity can be utilized such that the closure means slide towards the end of the guide, to for example a clipping machine.

In some embodiments, releasable locking means can be provided to hold the rotatable magazine in a predetermined position such that the discharge opening of the magazine is at least substantially aligned with the receiving opening of the closure means guide.

In some embodiments, the support member can comprise a flat surface including a bore and wherein the magazine can be attached to the support member such that the central longitudinal axis of the elongated support core of the magazine extends through the bore. Further, multiple bores can be utilized to receive multiple magazines which may have a different design, for example, in terms of the size of the storage spaces, the number of storage spaces, etc.

All rotatable devices disclosed can be rotated manually or by using a motor, such as a rotary actuator.

According to another embodiment, a production system for filling and closing a tubular or bag-shaped packaging case to produce sausage-shaped products, in particular sausages, comprises at least one magazine according to any embodiment, at least one magazine holder according to any embodiment, and a production machine, in particular a clipping machine, configured to apply at least one closure means provided by the magazine to a plait-like end of a tubular shaped package.

In some embodiments, the production system can comprise a control unit for controlling the production process of the production machine and a rotary actuator for the magazine connected to the control unit, the control unit being adapted to cause the rotary actuator to rotate the magazine according to at least one predefined criterion such that a storage space is located above the closure means receiving opening.

The production machine can further comprise a filling machine that fills tubular shaped packages, a tubular shaped package, configured to be closed on a first end with a closure means and configured to be filled with filling material. At least one closure means is provided by the at least one magazine holder to close a second end of the tubular shaped packages to form a sausage-shaped product.

In some embodiments, the filling material can be sausage meat. In other embodiments, other filling materials, such as cosmetics, adhesives, building materials or the like are also thinkable.

In some embodiments, the magazine can be configured to rotate when a first elongated storage space is empty, such that a second elongated storage space is rotated into a position to provide closure means via the receiving opening of the support member of the magazine holder to the guide. For this, there can be provided a sensor, such as a spring-loaded pin, to check whether the elongated storage space has run out of closure means. The spring-loaded pin can project if there are closure means provided in an elongated storage space and can extend and disconnect an electric contact or push a button if the elongated storage space has run out of closure means, thus signalling that the elongated storage space has run empty. A rotation unit or rotary actuator mentioned above, can then rotate the magazine such that closure means of another elongated storage space can be provided to the receiving opening and the guide of the magazine holder.

In some embodiments, the magazine can be configured to automatically rotate when the elongated storage space providing closure means via the receiving opening of the support member to the guide is out of closure means, and preferably is configured to stop rotating, when all elongated storage spaces are out of closure means.

For operation, a bar of closure means is stored in an elongated storage space of the magazine and the magazine is mounted on the magazine holder. The closure means are then provided from the respective elongated storage space via the discharge opening to the closure means receiving opening of the magazine holder and via the guide of the magazine holder to an access for closure means of a clipping machine.

When the production process starts, the clipping machine receives a closure means for closing a sausage-shaped product using, for example, a die and a punch. The closure means is therefore removed from the magazine in the process. The following closure means slides in position for the next clipping process. Once the elongated storage space of the magazine is empty, the magazine can be rotated about the central longitudinal axis of the elongated support core such that another elongated storage space comprising closure means is in a position to provide closure means via the discharge opening to the receiving opening of the support member of the magazine holder and to the guide.

Further advantages and preferred embodiments of the present invention will be described in the following together with the drawings listed below. Using the correction orientation of the Figs., downstream refers to devices or things being further located on the left and upstream refers to devices and things being further located on the right in the Figs.

### BRIEF DESCRIPTION OF THE FIGURES

- Fig. 1a: is a front view of a magazine according to the invention.
- Fig. 1b: is an isometric view of a magazine according to the invention.
- Fig. 2: is a top view of a magazine.
- Fig. 3: is a cross-sectional view of magazine.
- Fig. 4: is an isometric view of magazine holder according to the invention.
- Fig. 5: is a front view of a production system comprising a magazine, a magazine holder and a clipping machine.
- Fig. 6: is a schematic drawing of a production system comprising a clipping machine having a control unit and a sensor.

### DETAILED DESCRIPTION OF THE FIGURES

The detailed description of the figures comprises additional information to specific embodiments of the invention. According to the description, several combinations of embodiments according to the invention are described. Further, more than one embodiment of the invention may be described in the figures. It should be noted that even though the embodiments are described together, they are separate embodiments that are not linked together. Therefore, the disclosure does not only relate to the combinations of embodiments but to sub-combinations of the embodiments as well.

The terms *"upper"* and *"lower"* are to be interpreted with respect to the corresponding orientation in the figure.

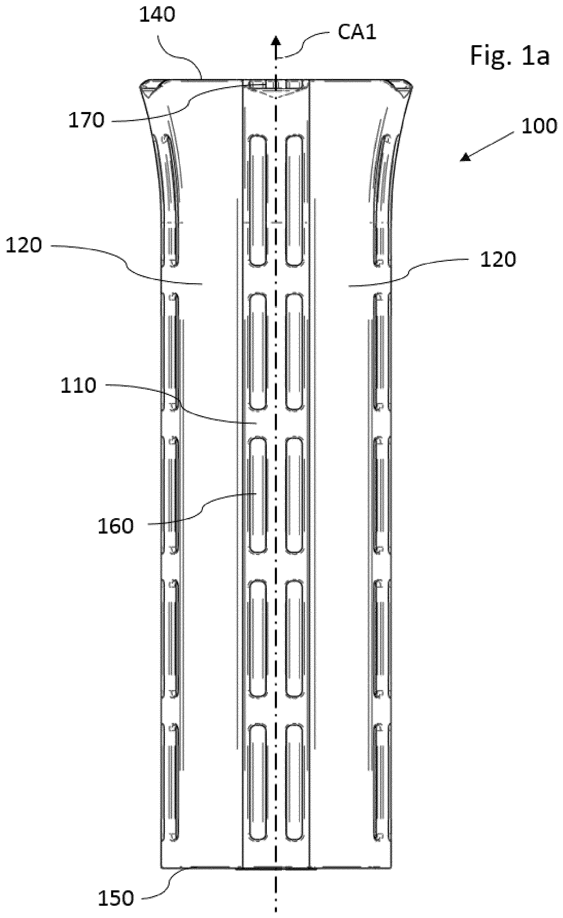

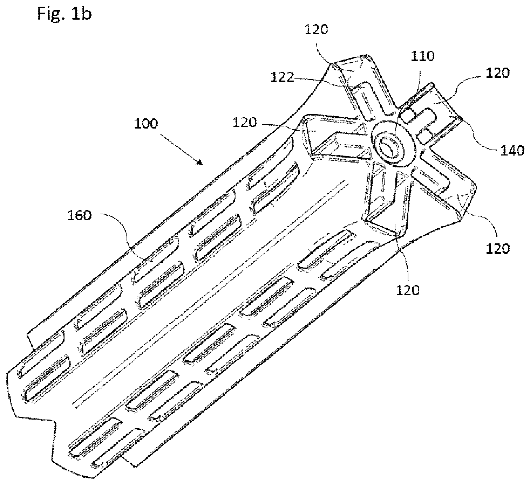

An exemplary magazine 100 according to the invention is depicted in Figs. 1a and 1b. Magazine 100 is used to hold closure means bars or rods which consist of at least two U-shaped closure means 130 (not shown), in particular U-shaped clips. Closure means 130 lie with their wide or broad sides against each other and are held together by suitable means, such as for example an adhesive tape attached to the outside of each base of closure means 130.

Magazine 100 comprises an elongated support core 110 extending along a central longitudinal axis CA1. Support core 110 has an at least substantially circular cross-section, viewed in a plane perpendicular to central longitudinal axis CA1. A plurality of elongated or longitudinally extending storage spaces 120 each having a central longitudinal axis CA2 are arranged radially outside of elongated support core 110. Central longitudinal axis CA2 of elongated storage spaces 120 extend preferably substantially parallel to central longitudinal axis CA1 of elongated support core 110. Each storage space 120 has an at least substantially rectangular or cuboid-shaped cross-section, with respect to a plane perpendicular to the longitudinal axis CA2 and define a space for accommodating at least one closure means bar. It goes without saying that storage spaces 120 can also have different cross sections.

Furthermore, each of elongated storage spaces 120 comprises a feed or first opening 140 on an upper side and a discharge or second opening 150 on the opposite side of feed opening 140, i.e. the lower side of each elongated storage spaces 120. The cross-sectional area of feed opening 140, viewed in a plane extending perpendicular to longitudinal axis CA2 of a respective storage space 120 is larger than the cross-sectional area of discharge opening 150, also measured in a plane extending perpendicular to longitudinal axis CA2 of a respective storage space 120. In Figs. 1a and 1b, due to the shown perspective, discharge opening 150 is not visible.

When a closure means bar is inserted into one of elongated storage spaces 120, closure means bar is fed into feed opening 140. The length of closure means bar and the length of elongated storage spaces 120 may be such that one closure means bar can be accommodated in a storage space 120, or a plurality of closure means bars can be accommodated one after the other, which then abut on each other. The difference in sizes of feed opening 140 and discharge opening 150 provides a beneficial inserting effect on closure means bars such the insertion of closure means bars is facilitated.

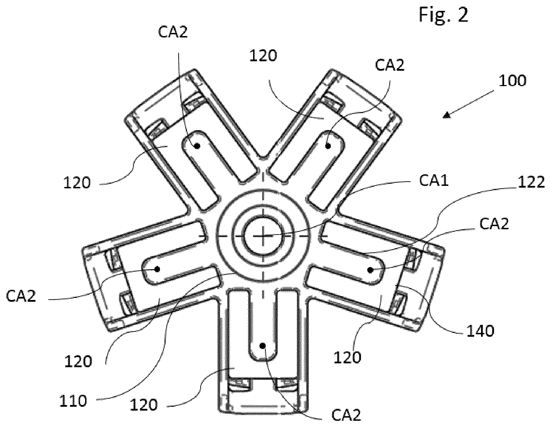

A top view of magazine 100 is depicted in Fig. 2. As can be seen in Fig. 2, magazine 100 comprises preferably five elongated storage spaces 120 positioned radially outside of elongated support core 110 in a star-like shape manner forming a revolver magazine. As is visible, five elongated storage spaces 120 are positioned to each other with an angle of 72 degrees, referred to their longitudinal axes CA2. Less or more numbers of elongated storage spaces 120 can alternatively be utilized which in turn can form a revolver magazine.

Moreover, each elongated storage space 120 comprises a guide means 122. Guide means 122 run preferably parallel to elongated support core 110 and extend at least substantially over the whole length of a storage space 120. Guide means 122 comprise preferably a longitudinally extending ridge or projection that projects from one inner wall of a storage space 120 into the space defined by the respective storage space, and extends preferably from feed opening 140 to discharge opening 150. Therefore, when elongated storage space 120 is depicted from the top, the shape of the elongated storage space 120 is preferably U-shaped. However, other shape configurations such as an S-shape, T-shape, V-shape or also inverted shapes are also possible. A certain shape configuration can be chosen depending on the shape of closure means 130 to be stored. As can be seen in Fig. 2, guide means 122 are shown to extend into elongated storage spaces 120 and comprise each three straight surfaces with rounded corners.

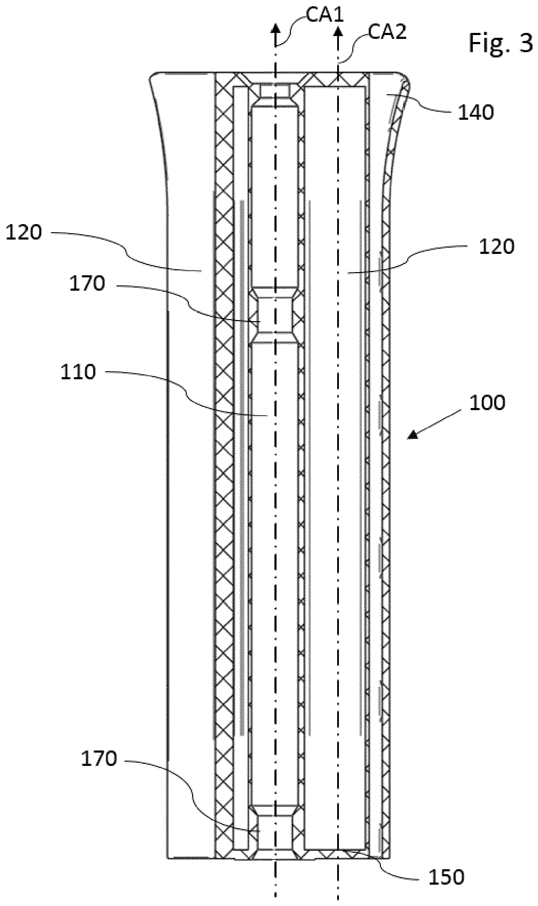

Fig. 3 depicts a longitudinal cross-sectional view of magazine 100 and an elongated storage space 120. As is visible in Fig. 3, central longitudinal axis CA1 of elongated support core 110 runs parallel to central longitudinal axis CA2 of elongated storage space 120. Furthermore, elongated support core 110 comprises a bearing portion 170 that is located on the lower side of magazine 100, preferably next to the lower end of magazine 100. Bearing portion 170 can be used to mount magazine 100 to a magazine holder 200, according to another embodiment of this application. At the upper side of storage space 120 feed opening 140 and at lower side, discharge opening 150 are depicted.

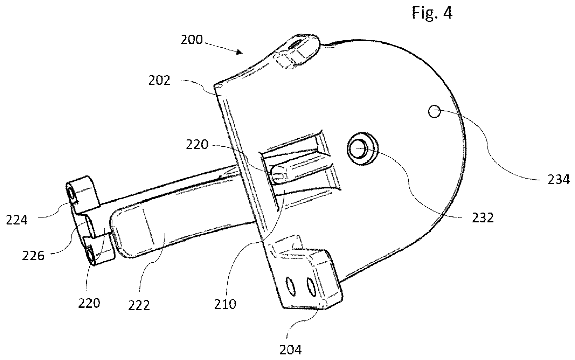

Referring now to Fig. 4, a magazine holder 200 is shown in an isometric view. Magazine holder 200 comprises a support member 202 in form of a plate comprising preferably a flat surface. Support member 202 is depicted substantially D-shaped. Alternative shapes such as substantially rounded shapes can also be utilized. Support member 202 is configured to receive at least one magazine 100. Magazine 100 can be received by a bore 232, which is used to mount magazine 100 if the magazine 100 comprises a hub 170 and a shaft, wherein the shaft can extended through bore 232. Bore 232 can then form a bearing. Magazine 100 can alternatively be received by a shaft of magazine holder 200. If magazine holder 200 comprises shaft, shaft is fixed to support member 202 using bore 232.

Furthermore, support member 202 comprises at least one closure means receiving opening 210. Closure means receiving opening 210 is used to guide closure means 130 provided from discharge opening 150 of a storage space 120 of a mounted magazine 100. Preferably, magazine holder 200 comprises at least one closure means guide 220 comprising preferably a bent shape that extends from closure means receiving opening 210 and ends with a dispensing portion 226. Closure means 130 that are provided by magazine 100 are then for example guided by closure means guide 220 to an access for closure means, like a closure means window of the machine, such as a clipping machine. Closure means 130 are provided via a dispensing portion 226 of closure means guide 220. Dispensing portion 226 can be preferably a dispensing piece, a dispensing opening or an end portion of closure means guide 220 where closure means are received by a clipping machine.

Support member 200 can be attached to a production machine using the closure means stored in magazine 100, preferably a clipping machine, via a holding section 204. Holding section 204 extends at least partially perpendicular to support member 202, preferably from an outer edge of the support member 202. In this manner, magazine holder 200 can be removably attached to a clipping machine using attachment means, such as for example magnets, rivets, bolts or a quick release latch.

Preferably, closure means guide 220 also comprises a housing 222. Housing 222 can be made of substantially the same material as closure means guide 220, such as metals, alloys, plastic, wood or the like. Housing 222 can extend substantially parallel to closure means guide 220. In Fig. 4, housing 222 is depicted having a bent shape, similar to closure means guide 220. However, other shapes, such as straight shapes or shapes comprising multiple bends can also be utilized. Housing 222 supports closure means guide 220 in guiding closure means 130 by providing a barrier to closure means 130 such that closure means 130 cannot fall off closure means guide 220.

Further, magazine holder 200 can comprise a releasable locking means 234, such as a spring-loaded pin, a screw or another means for stopping rotation of magazine 100. Releasable locking means 234 can be configured to be received by a corresponding recess in magazine 100 to fix the angular position of magazine 100, i.e. to stop the rotation of magazine 100. Releasable locking means 234 can be manually retracted into a hole. However, releasable locking means 234 can also be automatically retracted into the hole by utilizing an automatic retraction mechanism such as a magnet or an actuator. Either way, after retracting releasable locking means 234, magazine 100 is not blocked in rotation anymore by releasable locking means 234 and can freely rotate.

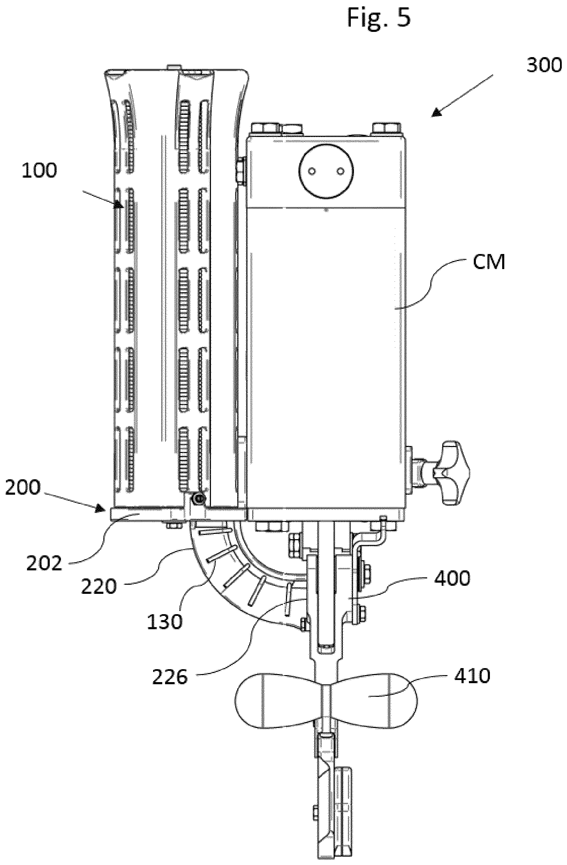

Fig. 5 depicts a front view of a production system 300 comprising a clipping machine CM, a magazine 100 and a magazine holder 200. As shown in Fig. 5, magazine holder 200 is attached to clipping machine CM such that dispensing portion 226 is in close vicinity to clipping machine CM, in particular close or directly adjacent to an opening or window for access of closure means to the machine CM provided in the housing of clipping machine CM. Closure means 130, like S-shaped clips 132 provided by dispensing portion 226 to clipping machine CM are then utilized in a clipping process to close a plait-like end of a sausage-shaped product.

Furthermore, magazine 100 is attached to magazine holder 200, preferably in a releasable manner. Magazine 100 is preferably rotatable mounted, such that magazine 100 can be rotated about central longitudinal axis CA1.

Clipping machine CM is depicted having a displacer unit 400 which is used to form plait-like end portions of tubular shaped portions for producing sausage-shaped products. Displacer unit 400 can comprise preferably two displacement elements that are arranged around a tubular shaped portion and create a plait -like portion by being moved towards each other. Displacer unit 400 is operated in a swinging manner by the operator using a handle 410. Upon movement of handle 410 towards clipping machine CM, displacer unit 400 created a plait-like portion by displacing a filling in a tubular-shaped portion. At a certain point of the movement of displacer unit 400 when a plait-like portion is formed, clipping machine CM applies at least one closure means 132 to the plait-like portion and closure means 132 is deformed using a punch and a die to close the plait-like portion such that an end of a sausage-shaped product is formed.

If referred to clipping machine CM, it should be understood that clipping machine CM can be manually operated, semi-automatic or automatic. Semi-automatic clipping machine CM can be preferably pneumatically driven. Displacer 400 of clipping machine CM can preferably provide an automatic mode apart from a non-automatic mode. Displacer unit 400 can preferably be also provided as an automatic displacer unit. As an automatic unit or in automatic mode, displacer unit 400 displaces a tubular-shaped portion to form a plait-like portion and then applies at least one closure means 132 automatically. If displacer unit 400 is an automatic displacer unit, handle 410 is not necessary anymore, but can still be provided when displacer 400 is used in non-automatic mode.

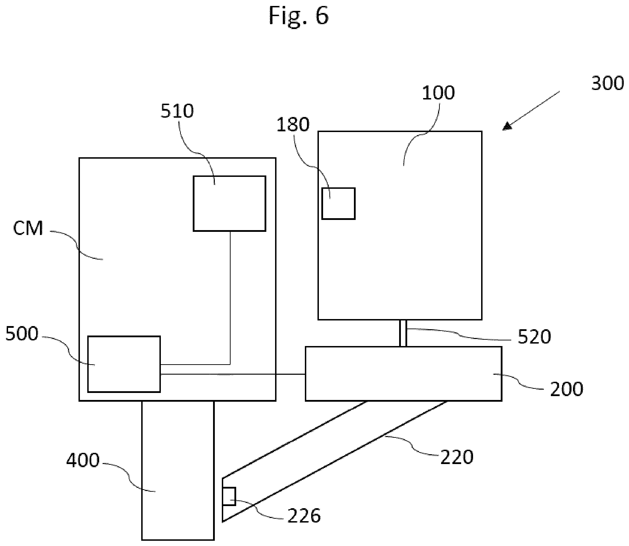

Fig. 6 depicts a schematic drawing of a production system 300 comprising clipping machine CM and magazine 100 received by magazine holder 200. Magazine holder 200 further comprises closure means guide 220. Clipping machine CM preferably comprises a control unit 500, a sensor 510 and displacer unit 400. Magazine 100 preferably comprises a machine readable identification mark 180. Sensor 510 can read the information provided by machine readable identification mark 180.

Control unit 500 is configured to receive at least one signal provided by sensor 510 to validate the information provided by machine readable identification mark 180 and to determine the compatibility of attached magazine 100 with system 300. Furthermore, control unit 500 is preferably configured to control a rotary actuator 520 to rotate magazine 100. Rotary actuator 520 can be preferably provided on magazine holder 200, for example, as a shaft that can be rotated. Rotary actuator 520 can comprise a motor that continuously or step-wise rotates attached magazine 100.

Control unit 500 of production system 300 can automatically determine whether an attached magazine 100 is compatible with system 300. Further, the since machine readable identification mark 180 can further contain information about the type and amount of closure means stored by magazine 100, control unit 500 of system 300 by reading machine readable identification mark 180 utilizing sensor 510 can gather information of the currently by magazine 100 provided closure means 132, e.g. the type of closure means 132 and the amount of closure means 132. Furthermore, as machine readable identification mark 180 is provided on an outer surface of magazine 100 with a plurality of elongated storage spaces 120, the information of the position of machine readable identification mark 180 relative to the position of each elongated storage space 120 can be used to determine the currently to receiving opening 210 provided type of closure means 132.

In an exemplary method to close a sausage shaped end of a tubular shaped portion that is inserted into displacer unit 400, closure means 130 is provided by closure means guide 220 to clipping machine CM. The operator then pushes in a swinging manner handle 410 downwards to displace an end of a tubular shaped portion using the displacement shears, thus forming a plait-like portion. At a certain point of movement, clipping machine CM starts to push closure means 130 onto the plait-like portion. Closure means 130 is then pushed onto the plait-like portion using a punch and onto a die. The push force of the punch onto the die deforms closure means 130 such that closure means 130 surrounds the plait-like portion. In this manner, the plait-like portion is closed to form an end portion of a sausage-shaped portion. Alternatively, instead of a single closure means 130 a plurality of closure means 130 can be applied to form an end portion of a sausage-shaped portion and a beginning portion of another sausage shaped portion. Furthermore, a knife can also be present to cut the sausage-shaped portion.

### REFERENCE SIGNS

- BA: central longitudinal axis of a bearing portion
- CA1: central longitudinal axis of an elongated support core
- CA2: central longitudinal axis of an elongated storage space
- CB: closure means bar
- CM: clipping machine
- 100: magazine
- 110: elongated support core
- 120: elongated storage space
- 122: guide means
- 130: closure means
- 140: feed opening
- 150: discharge opening
- 170: bearing portion
- 180: machine readable identification mark
- 200: magazine holder
- 202: support member
- 204: holding section
- 210: receiving opening
- 220: guide
- 222: housing
- 224: holding portion
- 226: dispensing portion
- 232: bore
- 234: releasable locking means
- 300: production system
- 400: displacer unit
- 410: handle
- 500: control unit
- 510: sensor
- 520: rotary actuator

## Claims

1. A magazine (100) for storing and providing at least one closure means bar consisting of at least two closure means (130) arranged abutting one another at their wide sides, in particular at least substantially U-shaped closure means, comprising
at least one elongated support core (110) having a central longitudinal axis (CA1), and
at least two elongated storage spaces (120) arranged on an outer circumferential side of the support core (110), each of the at least two elongated storage spaces (120) having a central longitudinal axis (CA2) that extends at least substantially parallel to the central longitudinal axis (CA1) of the support core (100),
wherein each elongated storage space (120) is configured to receive at least one closure means bar (CB),
wherein each elongated storage space (120) has at least one first opening (140) on an end surface of the elongated storage space (120),
**characterised in that**
each elongated storage space (120) comprises at least one guide means (122) that extends from an inner wall of storage space (120) parallel to the central longitudinal axis (CA1) of the support core (110) inside the elongated storage space (120).

2. The magazine (100) according to claim 1, wherein each elongated storage space (120) has, in addition to the first opening (140), a second opening (150) disposed on an end surface opposite the end surface having the first opening (140), and preferably,
wherein the cross-sectional area of the first opening (140) is larger than the cross-sectional area of the second opening (150).

3. The magazine (100) according to any of the previous claims, wherein at least one component of the magazine (100) is at least partially made in a 3D printing process.

4. The magazine (100) according to any of the previous claims, wherein the at least two elongated storage spaces (120) are equidistant arranged to each other on a closed curve surrounding the central longitudinal axis (CA1) of the elongated support core (100).

5. The magazine (100) according to any of the previous claims, wherein each of the at least two elongated storage spaces (120) comprises at least one viewing hole (160) on an outer surface.

6. The magazine (100) according to any of the previous claims, wherein the support core (100) comprises at least one bearing portion (170) having a central longitudinal axis (BA), wherein the central longitudinal axis (BA) of the bearing portion (170) is coaxially aligned with the central longitudinal axis (CA1) of the elongated support core (110).

7. The magazine (100) according to any of the previous claims, wherein at least the support core (110) has a predetermined colour corresponding to a characteristic of a specific closure means type.

8. The magazine (100) according to any of the previous claims, wherein a machine readable identification mark is provided for identifying at least the size of a specific closure means type.

9. The magazine (100) according to any of the previous claims, wherein a closure means bar is stored in each of elongated storage spaces (120), and wherein each of the storage spaces (120) comprises a lid or cover on the first opening (140) to prevent the closure means bar from falling out of the first opening (140).

10. A magazine holder (200) configured to receive at least one magazine (100) according to any of claims 1 to 9, and configured to provide at least one closure means (130) for a production machine, in particular a clipping machine, the magazine holder (200) comprising:
a support member (202) having at least one closure means receiving opening (210) and at least one closure means guide (220) extending from the closure means receiving opening (210) to at least one dispensing portion (226) configured to be disposed adjacent a closure means access of a production machine, the support member (202) being configured to receive the magazine (100) rotatably about the central longitudinal axis (CA1) of the magazine (100), and
a holding section (204) extending at least partially perpendicular to support member (202).

11. The magazine holder (200) according to claim 10, wherein the holding section (204) is provided for detachably attaching the magazine holder (200) to a production machine.

12. The magazine holder (200) according to claim 10 or 11, wherein the closure means guide (220) has a bent shape.

13. The magazine holder (200) according to any of the previous claims, wherein releasable locking means (234) are provided to hold the rotatable magazine (100) in a predetermined position such that the first opening (140) of the magazine (100) is at least substantially aligned with the closure means receiving opening (210) of the support member (202).

14. A production system (300) for filling and closing a tubular or bag-shaped packaging case to produce sausage-shaped products, in particular sausages, comprising:
at least one magazine (100) according to any of claims 1 to 9;
at least one magazine holder (200) according to any of claims 10 to 13; and
a production machine, in particular a clipping machine (CM), configured to apply at least one closure means (130) provided by the magazine (100) via the magazine holder (200) to a plait-like end of a tubular shaped package.

15. The production system (300) according to claim 14, wherein the production system (300) comprises a control unit (500) for controlling the production process of the production machine and a rotary actuator (520) for the magazine (100) connected to the control unit (500), the control unit (500) being adapted to cause the rotary actuator (520) to rotate the magazine (100) according to at least one predefined criterion such that a storage space (120) is located above the closure means receiving opening (210).

## Patentansprüche

1. Magazin (100) zum Speichern und Bereitstellen von mindestens einer Verschlussmittelstange, die aus mindestens zwei an ihren Breitseiten aneinanderstoßend angeordneten, insbesondere zumindest im Wesentlichen U-förmigen Verschlussmitteln (130) besteht, umfassend:
mindestens einen langgestreckten Trägerkern (110), der eine Längsmittelachse (CA1) aufweist, und
mindestens zwei langgestreckte Speicherräume (120), die an einer Außenumfangsseite des Trägerkerns (110) angeordnet sind, wobei jeder der mindestens zwei langgestreckten Speicherräume (120) eine Längsmittelachse (CA2) aufweist, die sich zumindest im Wesentlichen parallel zu der Längsmittelachse (CA1) des Trägerkerns (100) erstreckt,
wobei jeder langgestreckte Speicherraum (120) dazu konfiguriert ist, mindestens eine Verschlussmittelstange (CB) aufzunehmen,
wobei jeder langgestreckte Speicherraum (120) mindestens eine erste Öffnung (140) an einer Endfläche des langgestreckten Speicherraums (120) aufweist,
**dadurch gekennzeichnet, dass**
jeder langgestreckte Speicherraum (120) mindestens ein Führungsmittel (122) umfasst, das sich von einer Innenwand des Speicherraums (120) parallel zur Längsmittelachse (CA1) des Trägerkerns (110) innerhalb des langgestreckten Speicherraums (120) erstreckt.

2. Magazin (100) nach Anspruch 1, wobei jeder langgestreckte Speicherraum (120) außerdem neben der ersten Öffnung (140) eine zweite Öffnung (150) aufweist, die an einer der Endfläche mit der ersten Öffnung (140) gegenüberliegenden Endfläche angeordnet ist, und vorzugsweise,
wobei die Querschnittsfläche der ersten Öffnung (140) größer ist als die Querschnittsfläche der zweiten Öffnung (150).

3. Magazin (100) nach einem der vorangehenden Ansprüche, wobei mindestens eine Komponente des Magazins (100) zumindest teilweise in einem 3D-Druckverfahren hergestellt ist.

4. Magazin (100) nach einem der vorangehenden Ansprüche, wobei die mindestens zwei langgestreckten Speicherräume (120) auf einer geschlossenen Kurve, die die Längsmittelachse (CA1) des langgestreckten Trägerkerns (100) umgibt, äquidistant zueinander angeordnet sind.

5. Magazin (100) nach einem der vorangehenden Ansprüche, wobei jeder der mindestens zwei langgestreckten Speicherräume (120) mindestens ein Sichtloch (160) an einer Außenfläche umfasst.

6. Magazin (100) nach einem der vorangehenden Ansprüche, wobei der Trägerkern (100) mindestens einen Lagerabschnitt (170) mit einer Längsmittelachse (BA) aufweist, wobei die Längsmittelachse (BA) des Lagerabschnitts (170) koaxial zur Längsmittelachse (CA1) des langgestreckten Trägerkerns (110) ausgerichtet ist.

7. Magazin (100) nach einem der vorangehenden Ansprüche, wobei zumindest der Trägerkern (110) eine vorbestimmte Farbe aufweist, die einem Merkmal eines bestimmten Verschlussmitteltyps entspricht.

8. Magazin (100) nach einem der vorangehenden Ansprüche, wobei eine maschinenlesbare Identifikationsmarkierung vorgesehen ist, um zumindest die Größe eines bestimmten Verschlussmitteltyps zu identifizieren.

9. Magazin (100) nach einem der vorangehenden Ansprüche, wobei in jedem der langgestreckten Speicherräume (120) eine Verschlussmittelstange gespeichert ist, und wobei jeder der Speicherräume (120) einen Deckel oder eine Abdeckung auf der ersten Öffnung (140) umfasst, um zu verhindern, dass die Verschlussmittelstange aus der ersten Öffnung (140) herausfällt.

10. Magazinhalter (200), der dazu konfiguriert ist, mindestens ein Magazin (100) nach einem der Ansprüche 1 bis 9 aufzunehmen, und der dazu konfiguriert ist, mindestens ein Verschlussmittel (130) für eine Produktionsmaschine, insbesondere eine Clipmaschine, bereitzustellen, wobei der Magazinhalter (200) umfasst:
ein Trägerelement (202) mit mindestens einer Verschlussmittel-Aufnahmeöffnung (210) und mindestens einer Verschlussmittel-Führung (220), die sich von der Verschlussmittel-Aufnahmeöffnung (210) zu mindestens einem Abgabeabschnitt (226) erstreckt, der dazu konfiguriert ist, benachbart zu einem Verschlussmittel-Zugang einer Produktionsmaschine angeordnet zu werden, wobei das Trägerelement (202) dazu konfiguriert ist, das Magazin (100) drehbar um die Längsmittelachse (CA1) des Magazins (100) aufzunehmen, und
eine Haltesektion (204), die sich zumindest teilweise senkrecht zum Trägerelement (202) erstreckt.

11. Magazinhalter (200) nach Anspruch 10, wobei die Sektion (204) zum abnehmbaren Anbringen des Magazinhalters (200) an einer Produktionsmaschine vorgesehen ist.

12. Magazinhalter (200) nach Anspruch 10 oder 11, wobei die Verschlussmittel-Führung (220) eine gebogene Form aufweist.

13. Magazinhalter (200) nach einem der vorangehenden Ansprüche, wobei lösbare Verriegelungsmittel (234) vorgesehen sind, um das drehbare Magazin (100) in einer vorbestimmten Stellung zu halten, so dass die erste Öffnung (140) des Magazins (100) zumindest im Wesentlichen auf die Verschlussmittel-Aufnahmeöffnung (210) des Trägerelements (202) ausgerichtet ist.

14. Produktionssystem (300) zum Füllen und Verschließen einer schlauch- oder beutelförmigen Verpackungshülle zur Herstellung von wurstförmigen Produkten, insbesondere Würsten, umfassend:
mindestens ein Magazin (100) nach einem der Ansprüche 1 bis 9;
mindestens einen Magazinhalter (200) nach einem der Ansprüche 10 bis 13; und
eine Produktionsmaschine, insbesondere eine Clipmaschine (CM), die dazu konfiguriert ist, mindestens ein von dem Magazin (100) bereitgestelltes Verschlussmittel (130) über den Magazinhalter (200) an einem zopfartigen Ende einer schlauchförmigen Verpackung anzubringen.

15. Produktionssystem (300) nach Anspruch 14, wobei das Produktionssystem (300) eine Steuereinheit (500) zum Steuern des Produktionsprozesses der Produktionsmaschine und einen Drehaktuator (520) für das Magazin (100) umfasst, der mit der Steuereinheit (500) verbunden ist, wobei die Steuereinheit (500) dazu eingerichtet ist, den Drehaktuator (520) zu veranlassen, das Magazin (100) entsprechend mindestens einem vordefinierten Kriterium so zu drehen, dass sich ein Speicherraum (120) über der Verschlussmittel-Aufnahmeöffnung (210) befindet.

## Revendications

1. Magasin (100) destiné à stocker et à fournir au moins une barre de moyens de fermeture constituée d'au moins deux moyens de fermeture (130) agencés en butée l'un contre l'autre au niveau de leurs côtés larges, en particulier des moyens de fermeture au moins sensiblement en forme de U, comprenant
au moins un noyau support (110) allongé présentant un axe longitudinal central (CA1) et
au moins deux espaces de stockage allongés (120) agencés sur un côté circonférentiel externe du noyau support (110), chacun desdits au moins deux espaces de stockage allongés (120) présentant un axe longitudinal central (CA2) qui s'étend au moins sensiblement parallèlement à l'axe longitudinal central (CA1) du noyau support (100),
chaque espace de stockage allongé (120) étant conçu pour recevoir au moins une barre (CB) de moyens de fermeture,
chaque espace de stockage allongé (120) présentant au moins une première ouverture (140) sur une surface d'extrémité de l'espace de stockage allongé (120),
**caractérisé en ce que** chaque espace de stockage allongé (120) comprend au moins un moyen de guidage (122) qui s'étend à partir d'une paroi interne d'espace de stockage (120) parallèlement à l'axe longitudinal central (CA1) du noyau support (110) à l'intérieur de l'espace de stockage allongé (120).

2. Magasin (100) selon la revendication 1, chaque espace de stockage allongé (120) présentant, en plus de la première ouverture (140), une seconde ouverture (150) disposée sur une surface d'extrémité opposée à la surface d'extrémité présentant la première ouverture (140) et, de préférence,
la surface de section transversale de la première ouverture (140) étant plus grande que la surface de section transversale de la seconde ouverture (150).

3. Magasin (100) selon l'une quelconque des revendications précédentes, au moins un composant du magasin (100) étant au moins partiellement réalisé dans un procédé d'impression 3D.

4. Magasin (100) selon l'une quelconque des revendications précédentes, lesdits au moins deux espaces de stockage allongés (120) étant agencés de manière équidistante l'un par rapport à l'autre sur une courbe fermée entourant l'axe longitudinal central (CA1) du noyau support (100) allongé.

5. Magasin (100) selon l'une quelconque des revendications précédentes, chacun desdits au moins deux espaces de stockage allongés (120) comprenant au moins un trou de visualisation (160) sur une surface externe.

6. Magasin (100) selon l'une quelconque des revendications précédentes, le noyau support (100) comprenant au moins une partie palier (170) présentant un axe longitudinal central (BA), l'axe longitudinal central (BA) de la partie palier (170) étant aligné de manière coaxiale avec l'axe longitudinal central (CA1) du noyau support (110) allongé.

7. Magasin (100) selon l'une quelconque des revendications précédentes, au moins le noyau support (110) présentant une couleur prédéterminée correspondant à une caractéristique d'un type spécifique de moyen de fermeture.

8. Magasin (100) selon l'une quelconque des revendications précédentes, une marque d'identification lisible par machine étant prévue afin d'identifier au moins la dimension d'un type spécifique de moyen de fermeture.

9. Magasin (100) selon l'une quelconque des revendications précédentes, une barre de moyens de fermeture étant stockée dans chacun des espaces de stockage allongés (120) et chacun des espaces de stockage (120) comprenant un capuchon ou un couvercle sur la première ouverture (140) afin d'empêcher la chute de la barre de moyens de fermeture hors de la première ouverture (140).

10. Support (200) de magasin conçu pour recevoir au moins un magasin (100) selon l'une quelconque des revendications 1 à 9 et conçu pour fournir au moins un moyen de fermeture (130) pour une machine de production, en particulier une machine d'agrafage, le support (200) de magasin comprenant :
un élément support (202) présentant au moins une ouverture de réception (210) de moyen de fermeture et au moins un guide (220) de moyen de fermeture s'étendant depuis l'ouverture de réception (210) de moyen de fermeture à au moins une partie de distribution (226) conçue pour être disposée de manière adjacente à un accès de moyen de fermeture d'une machine de production, l'élément support (202) étant conçu pour recevoir le magasin (100) de manière rotative autour de l'axe longitudinal central (CA1) du magasin (100) et
une section de maintien (204) s'étendant au moins partiellement perpendiculairement à l'élément support (202).

11. Support (200) de magasin selon la revendication 10, la section de maintien (204) étant prévue pour fixer de manière amovible le support (200) de magasin à une machine de production.

12. Support (200) de magasin selon la revendication 10 ou 11, le guide (220) de moyen de fermeture présentant une forme courbée.

13. Support (200) de magasin selon l'une quelconque des revendications précédentes, des moyens de verrouillage libérables (234) étant prévus pour maintenir le magasin (100) rotatif dans une position prédéterminée de telle sorte que la première ouverture (140) du magasin (100) est au moins sensiblement alignée sur l'ouverture de réception (210) de moyen de fermeture de l'élément support (202).

14. Système de production (300) destiné à remplir et à fermer une enveloppe d'emballage tubulaire ou en forme de sac pour la production de produits en forme de saucisse, en particulier des saucisses, comprenant :
au moins un magasin (100) selon l'une quelconque des revendications 1 à 9 ;
au moins un support (200) de magasin selon l'une quelconque des revendications 10 à 13 ;
et
une machine de production, en particulier une machine d'agrafage (CM), conçue pour appliquer au moins un moyen de fermeture (130) fourni par le magasin (100) par l'intermédiaire du support (200) de magasin à une extrémité en forme de pli d'un emballage de forme tubulaire.

15. Système de production (300) selon la revendication 14, le système de production (300) comprenant une unité de commande (500) destinée à commander le procédé de production de la machine de production et un actionneur rotatif (520) pour le magasin (100) relié à l'unité de commande (500), l'unité de commande (500) étant conçue pour amener l'actionneur rotatif (520) à faire tourner le magasin (100) selon au moins un critère prédéfini de telle sorte qu'un espace de stockage (120) est situé au-dessus de l'ouverture de réception (210) de moyen de fermeture.
